Europäisches Patentamt

European Patent Office

Office européen des brevets

(19)

(11) Veröffentlichungsnummer: **0 202 459 B1**

# EUROPÄISCHE PATENTSCHRIFT

(12)

(45) Veröffentlichungstag der Patentschrift: **22.05.91**

(51) Int. Cl.⁵: **H05B 41/18**

(21) Anmeldenummer: **86105019.3**

(22) Anmeldetag: **11.04.86**

(54) **Schaltungsanordnung zum Betrieb wenigstens einer Leuchtstofflampe.**

(30) Priorität: **13.04.85 DE 3513311**

(43) Veröffentlichungstag der Anmeldung:
**26.11.86 Patentblatt 86/48**

(45) Bekanntmachung des Hinweises auf die
Patenterteilung:
**22.05.91 Patentblatt 91/21**

(84) Benannte Vertragsstaaten:
**AT BE CH DE FR GB IT LI NL**

(56) Entgegenhaltungen:
**DE-A- 2 810 400**
**US-A- 3 900 783**

(73) Patentinhaber: **ABB CEAG Licht- und Stromversorgungstechnik GmbH
Senator-Schwarz-Ring 26
W-4770 Soest(DE)**

(72) Erfinder: **Jütte, Reinhold
Barbarastrasse 32
W-3538 Marsberg 9(DE)**
Erfinder: **Klaas, Wilfried, Ing.(grad.)
Jägerstrasse 12
W-4773 Möhnesee 13(DE)**
Erfinder: **Scharfenberg, Manfred, Ing.(grad.)
Hallohweg 81
W-4750 Unna(DE)**

(74) Vertreter: **Rupprecht, Klaus, Dipl.-Ing. et al
c/o CEAG Licht- und Stromversorgungstechnik GmbH ZPT Postfach 100351
W-6800 Mannheim 1(DE)**

## Beschreibung

Die Erfindung betrifft eine Schaltungsanordnung zum Betrieb mindestens einer Notleuchte mit Leuchtstofflampe gemäß dem Oberbegriff des Anspruches 1.

Für den Start und den Betrieb von Leuchtstofflampen werden Vorschaltgeräte verwendet, die beim Vorheizen der Lampenelektroden den Vorheizstrom auf die richtige Größe begrenzen, in Verbindung mit dem Starter die Spannungsspitze liefern und beim Betrieb der Lampe den Strom begrenzen sollen. Diese Vorschaltgeräte sind gegebenenfalls durch Kapazitäten zu ergänzen, um die induktive Blindleistungsaufnahme zu verringern (siehe Sturm, Vorschaltgeräte, 5. Auflage, 1974, Seite 148). Wenn Leuchtstofflampen mit Gleichstrom betrieben werden, dann sind Gleichstromvorschaltgeräte zu verwenden, die als ohmsche Widerstände ausgebildet sind. Die Induktivitäten würden in diesem Zusammenhang mit ihrem nur geringen ohmschen Widerstand kaum zur Strombegrenzung beitragen (siehe Sturm, a.a.O. Seite 299 ff.).

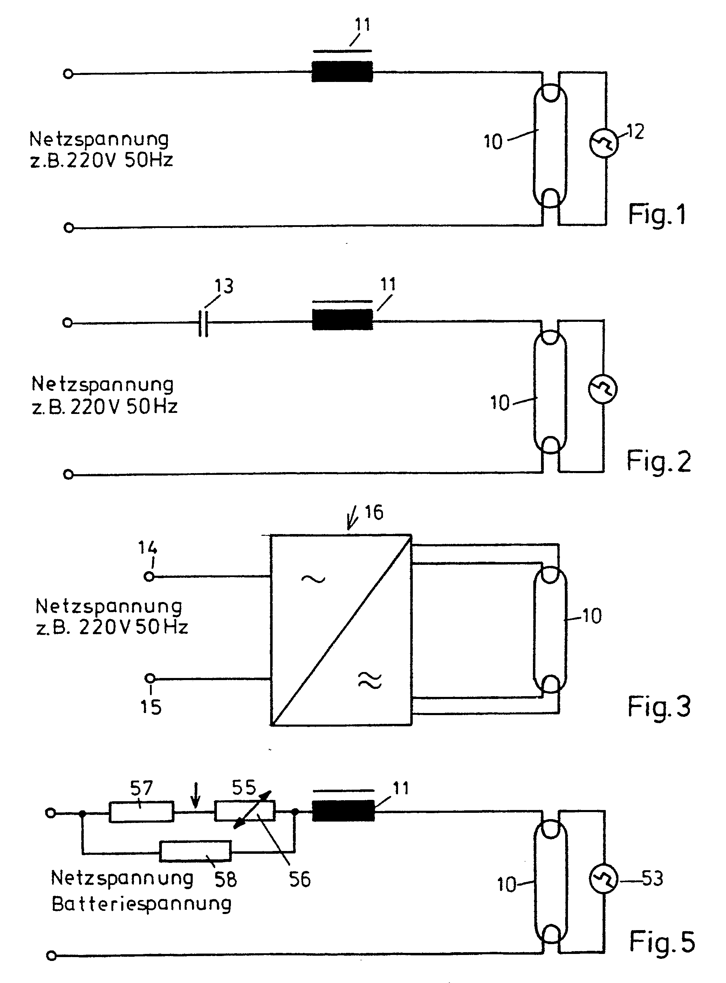

In Figur 1 und Figur 2 sind zwei Schaltungsanordnungen zum Betrieb einer Leuchtstofflampe mit Wechselstrom dargestellt, die dem Stand der Technik angehören. Der Leuchtstofflampe 10 ist bei der Schaltungsanordnung gemäß Figur 1 ein induktives Vorschaltgerät 11, eine Drossel, vorgeschaltet und parallel zur Leuchtstofflampe 10 befindet sich ein Starter 12. Bei der Schaltungsanordnung gemäß Figur 2 ist in Reihe mit dem Vorschaltgerät 11 ein Kondensator 13 geschaltet, der die Blindleistung kompensiert. Sowohl die Drossel 11 als auch der Kondensator 13 dienen dazu, die Verluste beim Betrieb an Wechselspannungsnetzen gering zu halten.

Neuerdings werden auch elektronische Strombegrenzungseinrichtungen benutzt. An den Klemmen 14 und 15 eines elektronischen Vorschaltgerätes 16 steht eine Netzspannung mit zum Beispiel 220 Volt und 50 Hz an. Diese Netzspannung wird in dem elektronischen Vorschaltgerät 16 in einen stabilisierten Wechselstrom und der Leuchtstofflampe 10 zugeführt.

Wie oben erwähnt, reicht die Strombegrenzung des konventionellen, induktiven Vorschaltgerätes 11 bei Gleichstrombetrieb der Lampe nicht aus, da nur der geringe ohmsche Anteil der Drossel wirkt. Bei der Schaltungsanordnung gemäß Figur 2 ist ein Gleichstrombetrieb überhaupt nicht möglich.

Die Schaltungsanordnung gemäß Figur 3 könnte sowohl mit Wechselspannung als auch mit Gleichspannung betrieben werden. Schaltungsanordnungen mit Gleichspannungsbetrieb sind aus Sturm, a.a.O., Seite 302 ff. bekanntgeworden. Hierbei ist ebenfalls eine Drosselspule vorgesehen, die die Aufgabe hat, einen Spannungsstoß zu erzeugen, und die Strombegrenzung erfolgt durch einen ohmschen Widerstand, siehe Seite 303, erster Absatz. Dieser ohmsche Widerstand kann auch durch eine oder mehrere Glühlampen erzeugt werden, was aus der Seite 304, letzter Absatz zu entnehmen ist. Die Größe des Vorwiderstandes bestimmt sich nach der Lampenart (siehe Seite 305, a.a.O., Abb. 2.1-277). Dabei besteht die Möglichkeit, die Drossel, die im Prinzip nur für den Startvorgang von Bedeutung ist, aus dem Lampenstromkreis herauszuschalten, um das Vorschaltgerät billiger bauen zu können. (siehe a.a.O., Seite 306 bzw. 307, Bilder 2.1-288 und 299).

In bestimmten Anwendungsfällen ist der Betrieb der Leuchtstofflampen auch bei Netzausfall aufrecht zu erhalten. Dabei ist die erforderliche Beleuchtungsstärke im allgemeinen erheblich geringer als bei der allgemeinen Beleuchtung; sie liegt bei ca. 1% der allgemeinen Beleuchtung.

Die Notbeleuchtung wird daher bisher wie folgt realisiert:

1. man setzt dezentrale Batterien in Leuchten oder Geräten zur Versorgung von Glühlampen oder Leuchtstofflampen ein, die normalerweise an einem Wechselrichter betrieben werden (siehe Sturm a.a.O., Seite 334 ff., insbesondere Seite 336, Bild 2.1-264).

2. man verwendet zentrale Batterien mit Gleichstromnetzen zur Versorgung von Glühlampen für Rettungszeichen-und Sicherheitsleuchten

3. man benutzt zentrale Batterien mit zentralen Wechselrichtern zur Speisung von Leuchtstofflampen oder Glühlampen in Rettungszeichenoder Sicherheitsleuchten

4. es kommen zentrale Batterien mit Gleichstromnetz und Leuchten mit an elektronischen Vorschaltgeräten betriebenen Leuchtstofflampen zum Einsatz

5. man benutzt Ersatzstromaggregate zum Betrieb beliebiger 220 V - 50 Hz-Verbraucher.

Der Nachteil der Systeme gemäß den obigen Punkten 3., 4. und 5., besteht darin, daß der Energiebedarf relativ hoch ist, da die Leuchten der allgemeinen Beleuchtung auch im Notlichtbetrieb benutzt werden, obwohl dort wesentlich geringerere Beleuchtungsstärken ausreichend wären. Der Nachteil des System gemäß Punkt 2 besteht darin, daß Glühlampen benutzt werden, deren Lichtausbeute um den Faktor 5 bis 10 schlechter ist als der von Leuchtstofflampen. Der Nachteil des Systemes Punkt 1 besteht darin, daß entweder auch handelsübliche Leuchten mit Leuchtstofflampen benutzt werden (mit einer zu hohen Beleuchtungsstärke), uneffektive Glühlampen zum Einsatz kommen.

Eine Schaltungsanordnung der eingangs genannten Art ist aus der DE-OS 28 10 400 bekannt geworden. Dort ist eine Umschalteinrichtung zwischen Netz- und Batteriebetrieb vorgesehen. In der Zuleitung zum Lampenstrom befindet sich lediglich eine Drossel als Vorschaltgerät. Auch hier besteht das Problem, daß das konventionelle, als Drossel ausgebildete Vorschaltgerät wegen des geringen ohmschen Anteils der Drossel für Gleichstrombetrieb nicht optimal ist.

Aufgabe der Erfindung ist es daher, eine Schaltungsanordnung zum Betrieb einer Leuchtstofflampe im Notlichtbetrieb der eingangs genannten Art zu schaffen, die mit möglichst geringem Aufwand eine zuverlässige Notbeleuchtung mit hohem Wirkungsgrad bewirkt.

Diese Aufgabe wird erfindungsgemäß gelöst durch die kennzeichnenden Merkmale des Anspruches 1.

Danach wird also in einer Leuchte mit Leuchtstofflampe in sogenannter kapazitiver Schaltung parallel zum Kondensator eine Strombegrenzungseinrichtung geschaltet, die beim Betrieb der Leuchte an Gleichstrom wirksam ist. In einfachster Form ist dies ein Widerstand. Die Leuchtstofflampe wird bei vorhandener Netzspannung vollständig mit Wechselstrom betrieben, wofür der Kondensator in Reihenschaltung mit der Drossel wirkt; bei Netzausfall wird die Batterie eingeschaltet, und über den parallel geschalteten ohmschen Widerstand wird der Strom begrenzt. Der Gleichspannungsbetrieb der Leuchtstofflampe kann zu einer Kataphorese führen (siehe Sturm, a.a.O. Seite 111), so daß eine Umschaltung vorgesehen werden könnte. Da aber im Notlichtbetrieb die Leuchtstofflampe lediglich 1 bzw. 3 Stunden brennt, ist ein derartiger Kataphoreseschutz nicht erforderlich, da die Lampe beim Betrieb an Wechselspannung später wieder regeneriert wird. Diese Betriebsart ist vorzugsweise bei Leuchtstofflampen kleiner Leistung anzuwenden; bei hoher Lampenleistung führen unter Umständen die Verluste in der Strombegrenzungseinrichtung, also im Widerstand, zu einer verhältnismäßig unwirtschaftlichen Lösung, da im allgemeinen die in dem Widerstand "verbratene" Energie annähernd der Betriebsenergie der Leuchtstofflampe entspricht.

Vorschaltgeräte in Form von Drosseln sind an sich bekannt, wie bspw. aus DE-PS 27 58 872 oder der DE-AS 15 89 131 bekanntgeworden ist. Dort allerdings ist eine Zusammenschaltung der Drossel mit einem Widerstand entsprechend obigen erfindungsgemäßen Merkmalen nicht beschrieben. Auch bei der Notbeleuchtungseinrichtung nach der DE-OS 20 28 848 ist eine erfindungsgemäße Ausgestaltung nicht dargestellt, obzwar eine Drossel sehr wohl im Lampenstromkreis untergebracht ist. Daß gemäß DE-OS 24 06 187, Seite 4, 2.Abs., die Vorschaltgeräte, die bei der dort beschriebenen Schaltungsanordnung eingesetzt sind, eine erhöhte Impedanz bieten, hängt im wesentlichen nicht von einer speziellen Zuordnung des Vorschaltgerätes zu einer Impedanz ab, sondern vielmehr davon, daß dort bei erhöhter Betriebsfrequenz zwangsläufig ein erhöhter Widerstandsbeiwert vorhanden ist. Mit der Erfindung hat dies nichts zu tun.

Wenn in der DE-OS 23 25 872 auf Seite 4, im letzten Absatz von einem Ballast oder einer Vorschalteinrichtung gesprochen wird, so sagt dies an sich nichts über die Ausgestaltung dieses Ballastes aus. Auch ein Blick auf die detaillierte Figur 2 der DE-OS 23 25 872 hilft hier nicht weiter.

Bei der FR-PS 2 267 675 ist in Reihe zu der Leuchtstofflampe eine Glühlampe geschaltet, die praktisch einen ohmschen Widerstand darstellt. Hier ist zwar eine Umschaltung von Wechselstrom auf Gleichstrom für den Notlichtbetrieb möglich; die Glühlampen aber wirken sowohl bei Wechselstrom als auch bei Gleichstrom, so daß sie mit dem Nachteil eines hohen Energieverbrauches für die Schaltungsanordnung behaftet sind.

Weitere vorteilhafte Ausgestaltungen der Erfindung sind den Unteransprüchen zu entnehmen.

In einer speziellen Ausgestaltung kann dabei die Widerstandsanordnung einen Kaltleiter enthalten, und gemäß kennzeichnendem Teil des Anspruches 5 ist als Starter ein elektromagnetischer Starter mit Bimetallverzögerung vorgesehen, der unter der Handelsbezeichnung "Garant-Starter" bekannt geworden, und in Sturm, a.a.O., Seite 136 bis 139 in den Bildern 2.1-83, 84 und 85 dargestellt ist.

Die Vorteile der erfindungsgemäßen Anordnung bestehen in folgendem:
Der Aufwand ist im Vergleich zum Betrieb am Wechselrichter oder an einem elektronischen Vorschaltgerät kleiner. Gegenüber einer Beleuchtung mit Glühlampen ist die Lichtausbeute höher, was insbesondere auf den Einsatz der Leuchtstofflampe zurückzuführen ist. Da die Lampen ständig in Betrieb sind, ist die Funktionsüberwachung der Lampen praktisch automatisch. Gegenüber der Glühlampe ist die Lebensdauer erhöht und gegenüber einem Wechselrichter oder einem elektronischen Vorschaltgerät ist auch die Zuverlässigkeit der erfindungsgemäßen Schal tungsanordnung größer. Bei Leuchtstofflampen kleiner Leistung ist der Aufbau ebenfalls noch zu vereinfachen und bei Anlagen mit zentralen Batterien sind Leuchten in beliebiger Weise parallel zu schalten, wobei getrennte Leitungen für Gleich- und Wechselspannung nicht erforderlich sind.

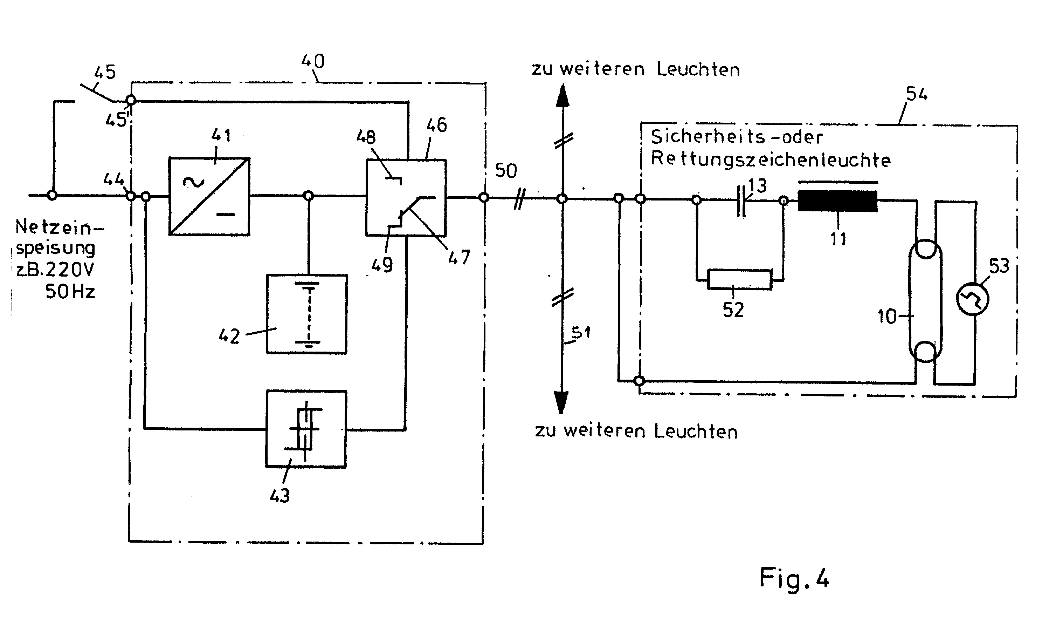

Anhand der Zeichnung Figuren 4 und 5, in denen zwei Ausführungsbeispiele der Erfindung dargestellt sind, sollen die Erfindung näher erläutert und beschrieben werden.

Es zeigen:

Fig. 1-3     Schaltungsbeispiele nach dem Stand der Technik;

Fig. 4 eine Schaltungsanordnung für eine Stromversorgung einer Leuchtstofflampe bei Netzbetrieb und in Batteriebetrieb und

Fig. 5 eine weitere Ausgestaltung des Vorschaltgerätes.

Die Figur 4 zeigt in schematischer Darstellung ein zentrales Notlichtversorgungssystem. Das Notlichtversorgungssystem enthält ein zentrales Versorgungsgerät 40, das in an sich bekannter Weise ein übliches Ladegerät 41 zum Aufladen einer zentralen Batterie 42 aufweist. Mittels einer Überwachungseinrichtung 43 wird die Höhe der Netzspannung, die an den Anschlußklemmen 44 des Versorgungsgerätes 40 bzw. über einen Schalter 45 an weiteren Anschlußklemmen 45 anliegt, gemessen und bei unterschreiten bzw. bei Netzausfall wird ein Umschalter 46 betätigt, der einen Kontakthebel 47 von einem mit dem Netz verbundenen Festkontakt 48 auf einen mit der Batterie verbundenen Festkontakt 49 umschaltet. Ein derartiger Umschalter kann auch ein elektronischer Umschalter oder ein Relais sein.

Der Ausgang des Versorgungsgerätes 40, der mit 50 bezeichnet ist, kann somit über den Schalter 45 und die Klemme 45' entweder Netzspannung oder nach Umschalten Gleichspannung von der Batterie 42 her führen. An den Ausgang 50 ist eine Stromkreisverteilerleitung 51 angeschlossen,an der mehrere Leuchten angeschlossen sein können. In Figur 4 erkennt man eine Leuchte, die die Bezugsziffer 10 (siehe Figuren 1 bis 3) aufweist und der eine Drossel 11 und ein Kondensator 13 vorgeschaltet ist. Erfindungsgemäß wird parallel zu dem Kondensator 13 ein Widerstand 52 geschaltet. Als Startgerät wird ein sogenannter "Garant-Starter" 53 verwendet (siehe obige Beschreibung).

Bei Netzbetrieb, wenn also der Schalthebel bzw. Kontakthebel 47 an dem Festkontakt 48 anliegt, wird die Leuchtstofflampe 10 über den Kondensator 13 und die Drossel 11 - wie alle anderen parallel an der Versorgungsleitung 51 geschalteten Leuchtstofflampen - mit Wechselstrom betrieben. Sowie der Schalter in die in Figur 4 dargestellte Stellung umschaltet, wird über die gleiche Leitung Gleichstrom der Leuchtstofflampe 10 zugeführt, für die der Kondensator eine Sperre darstellt, so daß der Gleichstrom durch den Widerstand 52 fließen muß, was zu einer Strombegrenzung für die Leuchtstofflampe 10 führt. Die Leuchtstofflampe 10 ist in eine Sicherheits- oder Rettungszeichenleuchte 54 eingebaut, in der sich auch die Drossel, der Kondensator 13 und der parallel dazu geschaltete ohmsche Widerstand 52 befinden.

Als Vorschaltgerät 11 ist ein konventionelles Standardvorschaltgerät für 220V und 50Hz zu verwenden; der Kompensationskondensator wird entsprechend der Leistungsaufnahme der Leuchtstofflampe gewählt und er könnte beispielsweise bei einer Leuchtstofflampe mit 8 Watt ca. 8,0 $\mu$F betragen. Der Widerstand müßte dann 220 Ohm aufweisen. Der Mehraufwand gegenüber einer handelsüblichen Leuchtstofflampe bzw. Leuchte mit einer 8 Watt-Leuchtstofflampe besteht in einem Widerstand und dem Austauschen eines üblicherweise verwendeten Glimmstarters gegen einen sogenannten "Garant-Starter". Die Lampe wird bei vorhandener Netzspannung mit 220V, 50Hz über das Vorschaltgerät betrieben und im Notlichtbetrieb an einer 110Volt-Batterie über den Widerstand 52 und das Vorschaltgerät 11. Die Verlustleistung beträgt sowohl im Netzbetrieb bei Nennspannung als auch im Notbetrieb bei Nennspannung jeweils 16 Watt; obwohl der Lampenstrom sich um 10% reduziert, ist der Lichtstrom um 10% höher gegenüber dem Netzbetrieb, so daß mit einer 8Watt-Leuchtstofflampe und einer Leistungsaufnahme von 16 Watt beispielsweise in der erfindungsgemäßen Schaltung 500 lm realisiert werden (zum Vergleich: die Leistungsaufnahme und der Lichtstrom handelsüblicher Glühlampen: 15 Watt, 100 lm; 25 Watt, 230 lm; 40 Watt, 430 lm; 60 Watt, 730 lm). Ein weiterer Vorteil besteht bei der angegebenen Ausführungsform (Leuchtstofflampe mit 8 Watt) darin, daß die Nutzungsdauer der Leuchtstofflampe von ca. 5000 Stunden gegenüber 1000 Stunden bei der Glühlampe erheblich höher liegt.

Anstatt eines kondensators mit parallel geschaltetem Widerstand 52 kann auch gemäß Figur 5 eine Widerstandsanordnung 55 vorgesehen sein, die einen in Reihe zur Drossel 11 geschalteten Kaltleiter 56 aufweist, zu dem zusätzlich ein ohmscher Widerstand 57 in Reihe geschaltet sein kann, was in der Figur 5 dargestellt ist, nicht aber unbedingt erforderlich ist. Zumindest parallel zu dem Kaltleiter 56 ist ein weiterer Widerstand 58 zu schalten, der dann, wenn der Widerstand 57 vorhanden ist, wie in Figur 5, parallel zu beiden Widerständen 56 und 57 geschaltet sein sollte. Beim Netzbetrieb, also bei 220 Volt, 50 Hz, entsteht am Kaltleiter 56 nur ein geringer Spannungsabfall. Bei Netzausfall und bei Betrieb an Gleichspannung, z.B. 110 Volt, fließt zunächst ein höherer Strom, bis sich der Kaltleiter ausreichend erwärmt hat, danach reduziert sich der Lampenstrom je nach Dimensionierung der Widerstände auf Werte bis zum 0,5- bis 0,9-fachen des Lampennennstromes. Die Vorteile dieser Schaltung bestehen darin, daß der Gleich- und Wechselstrombetrieb einer Leuchtstofflampe mit einem minimalen Bauelementaufwand erfolgen kann, nämlich insgesamt mit drei zusätzlich einzubauenden Widerständen. Im Netzbetrieb wird sich nur eine geringe Reduzierung der Leistung der Leuchtstofflampe ergeben, da der Kaltleiter 56 einen geringen Widerstand aufweist. Bei Umschaltung von Netzbetrieb auf Gleichspannungsbetrieb ist aber der Lichtstrom erhöht, was für die Adaption der Augen sinnvoll ist, wenn bei Netzausfall von einer relativ hohen Beleuchtungsstärke, z.B. 100 bis 1000 lx auf eine sehr geringe Beleuchtungsstärke z.B. ein 1 lx umgeschaltet wird. Man hat darüber hinaus auch einen nahezu konstanten Lichtstrom im Bereich 1,1 bis 0,9 der Nennspannungder Leuchtstofflampe. Dies ist besonders wichtig, wenn eine Planung der Sicherheitsbeleuchtungsanlage gemäß DIN 5053, Teil 5, durchgeführt werden muß, da dort nur die Beleuchtungsstärke am Ende der Betriebsdauer bewertet wird. Bei 0,9 der Nennspannung reduziert sich der Lichtstrom gegenüber dem Nennbetrieb um 8% in der erfindungsgemäßen Schaltung. Wird bei Glühlampen die Betriebsspannung um 10% gegenüber dem Nennwert reduziert, sinkt der Lichtstrom dort auf zwei Drittel des Nennwertes ab, und wird die Spannung auf 0,8 der Nennspannung reduziert, so würde eine Glühlampe nur noch 42% des Nennlichtstromes liefern.

## Ansprüche

1. Schaltungsanordnung zum Betrieb wenigstens einer Leuchtstofflampe (10) im Normal- und im Notbetrieb, mit Netz- und Batterieversorgung, mit einem Versorgungsgerät (40), das bei Ausfall der Netzspannung auf Batterieversorgung umschaltet, mit einem als Drossel ausgebildeten Vorschaltgerät (11) zur Begrenzung des Lampenstromes und mit einem Starter (53), dadurch gekennzeichnet, daß dem Vorschaltgerät (11) eine Widerstandsanordnung (55) in Reihe vorgeschaltet ist.

2. Schaltungsanordnung nach Anspruch 1 dadurch gekennzeichnet, daß die Widerstandsanordnung (55) einen Kondensator (13) und einen dazu parallel geschalteten ohmschen Widerstand (52) aufweist.

3. Schaltungsanordnung nach Anspruch 1, dadurch gekennzeichnet, daß die Widerstandsanordnung (55) einen Kaltleiter enthält.

4. Schaltungsanordnung nach Anspruch 3, dadurch gekennzeichnet, daß die Widerstandsanordnung (55) gegebenenfalls einen ohmschen Widerstand (57) in Reihe und zumindest parallel zu dem Kaltleiter einen weiteren ohmschen Widerstand (58) umfaßt.

5. Schaltungsanordnung nach einem der vorigen Ansprüche, dadurch gekennzeichnet, daß der Starter (53) ein elektomagnetischer Starter mit Bimetallverzögerung ist.

## Claims

1. Circuit arrangement for operating at least one fluorescent lamp (10) in normal and in emergency operation, with mains and battery supply, with a supply device (40) which switches to battery supply in the case of a failure of the mains voltage, with a ballast device (11) constructed as reactor for limiting the lamp current and with a starter (53), characterised in that the ballast device (11) is preceded in series by a resistor arrangement (55).

2. Circuit arrangement according to Claim 1, characterised in that the resistor arrangement (55) exhibits a capacitor (13) and an ohmic resistor (52) connected in parallel therewith.

3. Circuit arrangement according to Claim 1, characterised in that the resistor arrangement (55) contains a PTC thermistor.

4. Circuit arrangement according to Claim 3, characterised in that the resistor arrangement (55) comprises, if necessary, an ohmic resistor (57) in series and a further ohmic resistor (58) at least in parallel with the PTC thermistor.

5. Circuit arrangement according to one of the preceding claims, characterised in that the starter (53) is an electromagnetic starter with bimetallic delay.

## Revendications

1. Dispositif de branchement pour le fonctionnement d'au moins un tube fluorescent (10) en fonctionnement normal et en fonctionnement de secours, comprenant une alimentation par le réseau et une alimentation par batteries, une unité d'alimentation (40), qui lors d'une panne de secteur commute sur l'alimentation par batterie, un ballast (11) se présentant sous forme d'une bobine d'induction pour limiter la tension de lampe et un starter (53), caractérisé en ce qu'un dispositif de résistances (55) est branché en série avec le ballast (11), en amont de celui-ci.

2. Dispositif de branchement selon la revendication 1, caractérisé en ce que le dispositif de résistances (55) comporte un condensateur (13) et une résistance ohmique (52) branchée en parallèle avec celui-ci.

3. Dispositif de branchement selon la revendication 1, caractérisé en ce que le dispositif de résistances (55) comporte une thermistance.

4. Dispositif de branchement selon la revendication 3, caractérisé en ce que le dispositif de résistances (55) comprend le cas échéant une résistance ohmique (57) branchée en série et une autre résistance ohmique (58) branchée au moins en parallèle avec la thermistance.

5. Dispositif de branchement selon l'une des revendications précédentes, caractérisé en ce que le starter (53) est un starter électromagnétique à temporisateur à bilame.

Netzspannung
z.B. 220V 50Hz

Fig.1

Netzspannung
z.B. 220V 50Hz

Fig.2

Netzspannung
z.B. 220V 50Hz

Fig.3

Netzspannung
Batteriespannung

Fig.5

Fig. 4